# EUROPÄISCHE PATENTSCHRIFT

(11) **EP 1 300 281 B1**
(45) Veröffentlichungstag und Bekanntmachung des Hinweises auf die Patenterteilung: **20.12.2006**
(21) Anmeldenummer: 02019425.4
(22) Anmeldetag: 30.08.2002
(51) Int. Cl.: B60N 3/10

(54) **Halter für einen Getränkebehälter**
Holder for a beverage container
Support pour un conteneur à boisson

(30) Priorität: 28.09.2001 DE 10148189
(43) Veröffentlichungstag der Anmeldung: 09.04.2003
(73) Patentinhaber: fischer automotive systems GmbH, 72160 Horb (DE); DaimlerChrysler AG, 70567 Stuttgart (DE)
(72) Erfinder: Bieck, Torsten, 72178 Waldachtal (DE); Leopold, Gunter, 72270 Baiersbronn (DE); Körber, Jürgen, 71065 Sindelfingen (DE); Dürr, Bernhard, 75365 Calw-Stammheim (DE); Emhardt, Frank, Dipl.-Ing., 72569 Stuttgart (DE); Gaus, Hermann, Prof., 70619 Stuttgart (DE); Geisel, Thomas, Dipl.-Ing., 72108 Rottenburg (DE); Jung, Christoph, 75382 Althengstett (DE); Leucht, Rainer, Dipl.-Ing. (FH), 73666 Stuttgart (DE); Schrom, Ralf-Henning, Dip.-Ing., 72108 Rottenburg (DE); Tiefenbacher, Rainer, Dipl.-Ing., 71144 Steinenbronn (DE)

(56) Entgegenhaltungen:
- EP-A- 0 463 306
- DE-A- 10 014 898
- DE-A- 10 043 720
- DE-A- 19 820 511
- US-A- 4 417 764

## Beschreibung

Die Erfindung betrifft einen Halter für einen Getränkebehälter mit den Merkmalen des Oberbegriffs des Anspruchs 1.

Derartige Halter sind an sich bekannt. Sie sind üblicherweise zum Einbau in einen Kraftwagen oder ein sonstiges Fortbewegungsmittel vorgesehen. Es sind Halter mit einem Auszug bekannt, der aus einer eingeschobenen Grundstellung in eine ausgefahrene Gebrauchsstellung und umgekehrt bewegbar geführt ist. In der Grundstellung ist der Auszug bspw. in einem Gehäuse versenkt, er schließt üblicherweise bündig mit einem Armaturenbrett oder dgl. des Kraftwagens ab. In der ausgefahrenen Gebrauchsstellung steht der Auszug in einen Fahrgastraum vor und ist dadurch zugänglich. Der Auszug der bekannten Halter weist üblicherweise eine oder mehrere Einstellöffnungen zum Einstellen eines Getränkebehälters wie bspw. einer Getränkedose, einen Becher oder eine Tasse auf.

Die US-A-4 417 764 offenbart einen Halter mit zwei übereinander angeordneten, plattenförmigen und schubladenartig ausfahrbaren Auszügen, die unabhängig voneinander in eine Gebrauchsstellung ausfahrbar sind. Einer der beiden Auszüge weist zwei Einstellöffnungen für Getränkebehälter auf. Der andere Auszug ist beispielsweise als Schreibunterlage ausgebildet.

Der Erfindung liegt die Aufgabe zugrunde, einen derartigen Halter vorzuschlagen, dessen beide Auszüge an einer Vorderseite mit einer gemeinsamen Blende abdeckbar sind.

Diese Aufgabe wird erfindungsgemäß durch die Merkmale des Anspruchs 1 gelöst. Der Halter weist zwei Auszüge auf, die wahlweise aus einer in ein Gehäuse eingeschobenen Grundstellung in eine aus dem Gehäuse ausgefahrene Gebrauchsstellung verschiebbar sind. Zumindest einer der Auszüge ist als Halterung für einen Getränkebehälter ausgebildet, während der weitere Auszug Ausstattungselemente für einen anderen Verwendungszweck aufweisen kann. Die Erfindung ermöglicht damit die platzsparende Nutzung des Bauraums entweder für zwei unterschiedliche Haltertypen für verschiedenartige Getränkebehälter oder für einen Getränkebehälter in Kombination mit einer anderen Verwendungsmöglichkeit.

Des Weiteren weist der erfindungsgemäße Halter einen Schieber auf, mit dem zusammen sich jeweils einer der beiden Auszüge in die Gebrauchsstellung verschieben lässt. Der Schieber ermöglicht eine Gestaltung des Halters, die optisch den Eindruck nur eines Auszugs erweckt.

Zum Bewegen aus der Grund- in die Gebrauchsstellung und umgekehrt kann der Auszug eine Schwenklagerung aufweisen, mit der er um bspw. 90° aus der Grundstellung in die Gebrauchsstellung und umgekehrt schwenkbar geführt ist. Eine Ausgestaltung der Erfindung sieht eine Schiebeführung für den Auszug vor, mit der der Auszug schubladenartig in die ausgefahrene Gebrauchsstellung und zurück in die eingeschobene Grundstellung verschiebbar geführt ist.

Eine besonders vorteilhafte Kombination ergibt sich in der weiteren Ausgestaltung der Erfindung, dass der weitere Auszug des Halters einen Sektglashalter aufweist. Dadurch wird eine kippsichere Haltemöglichkeit für ein Sektglas erreicht, was aufgrund der Form von Sektgläsern bei herkömmlichen Haltern, die eine üblicherweise zylinderförmige Vertiefung als Einstellöffnung zum Einstellen eines Getränkebehälters aufweisen, nicht möglich ist. Der Auszug des erfindungsgemäßen Halters kann auch zwei oder mehr Sektglashalter aufweisen.

Der Sektglashalter des erfindungsgemäßen Halters weist bei einer Ausgestaltung der Erfindung ein vertikal im Auszug bewegliches Stellelement auf, auf das das Sektglas mit seinem üblicherweise kreisscheibenförmigen Fuß stellbar ist. Das Stellelement kann bspw. die Form einer Kreisscheibe aufweisen. Desweiteren weist der Sektglashalter mindestens einen Niederhalter auf, der aus einer Freigabestellung in eine Haltestellung und umgekehrt bewegbar ist. In der Haltestellung übergreift der Niederhalter den Fuß eines auf das Stellelement gestellten Sektglases und hält dadurch das Sektglas stehend auf dem Stellelement. Das Sektglas ist kippsicher gehalten. In der Freigabestellung ist das Sektglas entnehmbar. Vorzugsweise weist der Halter zwei einander gegenüberliegend angeordnete Niederhalter oder drei oder mehr in Umfangsrichtung voneinander beabstandete Niederhalter auf, die den Fuß eines auf das Stellelement gestellten Sektglases auf dem Stellelement und damit das Sektglas kippsicher stehend halten. Zwischen dem vertikal beweglichen Stellelement und dem Niederhalter besteht eine bspw. mechanische Wirkverbindung, d.h. das Stellelement bildet einen Antrieb für den Niederhalter und bewegt den Niederhalter beim nach unten Bewegen des Stellelements in die Haltestellung. Dadurch ist es möglich, das Sektglas mit seinem Fuß auf das Stellelement zu stellen und mit dem Sektglas das Stellelement nach unten zu drücken. Durch das nach unten Drücken des Stellelements bewegt dieses den Niederhalter in die Haltestellung, in der der Niederhalter den Fuß des Sektglases übergreift und auf dem Stellelement hält, so dass das Sektglas kippsicher stehend gehalten ist. Diese Ausgestaltung der Erfindung ermöglicht eine einfache Handhabung des Sektglashalters. Das Sektglas ist durch Stellen auf das Stellelement und Niederdrücken ohne weitere Manipulation kippsicher gehalten.

Eine Weiterbildung der Erfindung sieht eine Einstellöffnung für eine Sektflasche im Auszug sowie eine Stütze für die Sektflasche vor, die beim Ausfahren des Auszugs aus der Grundstellung in die Gebrauchsstellung nach unten schwenkt. Die beim Ausfahren des Auszugs nach unten schwenkende Stütze vergrößert eine Stützhöhe, in der eine in die Einstellöffnung eingestellte Sektflasche seitlich abgestützt wird, um die Sektflasche kippsicher in der Einstellöffnung zu halten. Durch die Ausbildung des Auszugs mit bspw. zwei Sektglashaltem und einer Einstellöffnung für die Sektflasche eignet sich der erfindungsgemäße Halter zum Halten einer geöffneten Sektflasche sowie zweier Sektgläser.

Die Erfindung wird nachfolgend anhand eines in der Zeichnung dargestellten Ausführungsbeispiels näher erläutert. Es zeigen:
- Figur 1: einen erfindungsgemäßen Halter mit einem ersten Auszug in einer Gebrauchsstellung in perspektivischer Darstellung;
- Figur 2: den Halter aus Figur 1 in einem mehrfach abgewinkelten Längsschnitt entlang Linie II-II in Figur 3;
- Figur 3: den Halter aus Figur 1 in Draufsicht;
- Figur 4: den Halter aus Figur 1 mit einem zweiten Auszug in einer Gebrauchsstellung in perspektivischer Darstellung;
- Figur 5: den Halter aus Figur 4 in einem mehrfach abgewinkelten Längsschnitt entlang Linie V-V in Figur 6; und
- Figur 6: den Halter aus Figur 4 in Draufsicht.

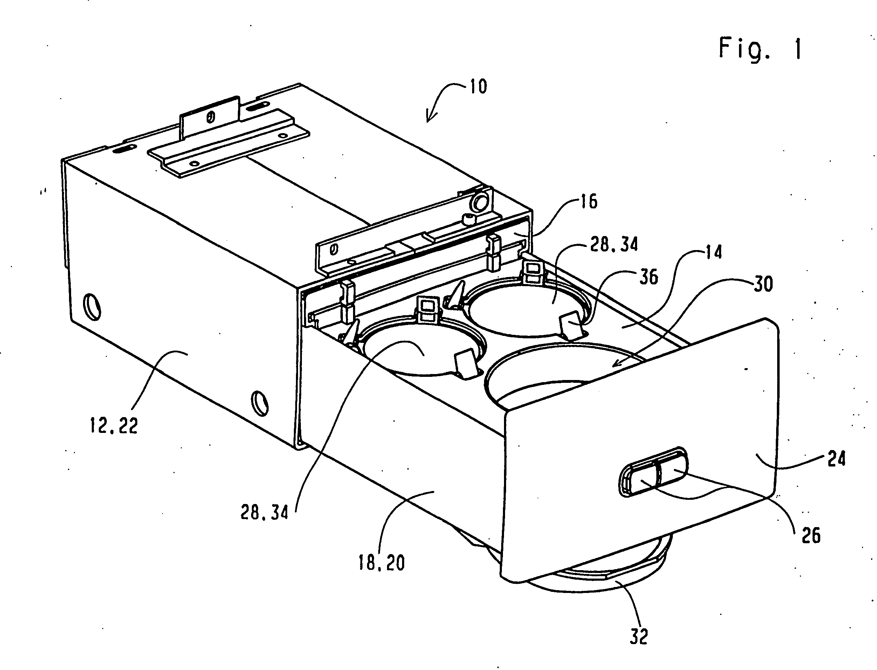

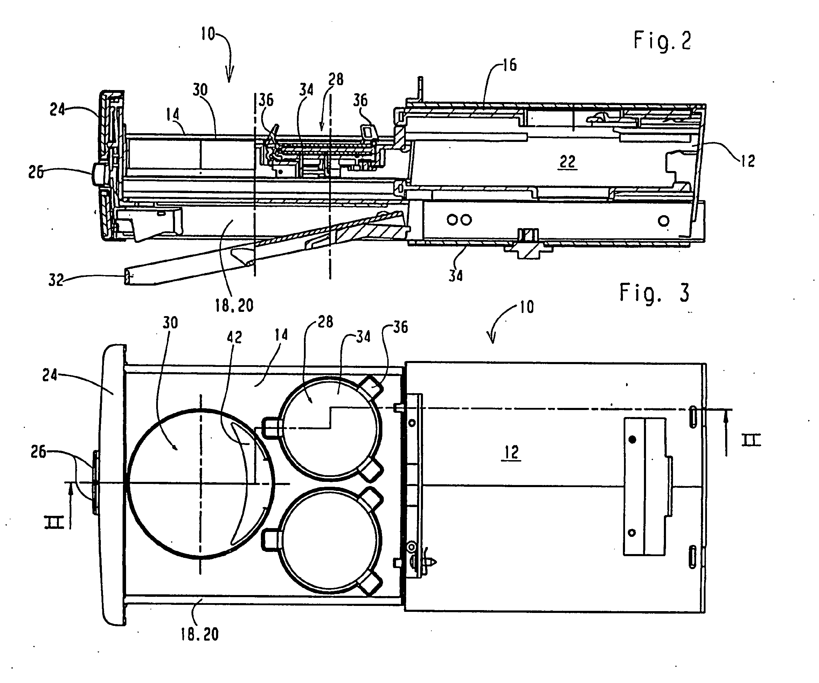

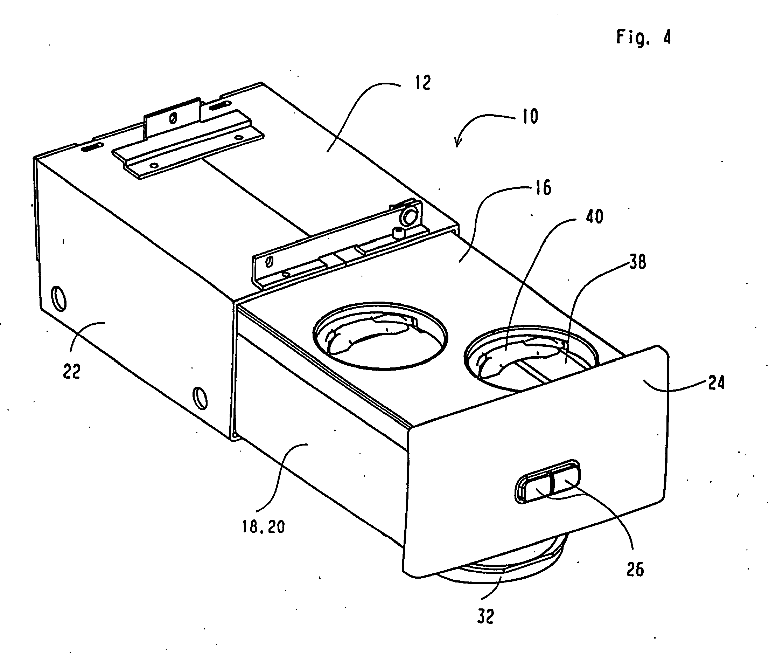

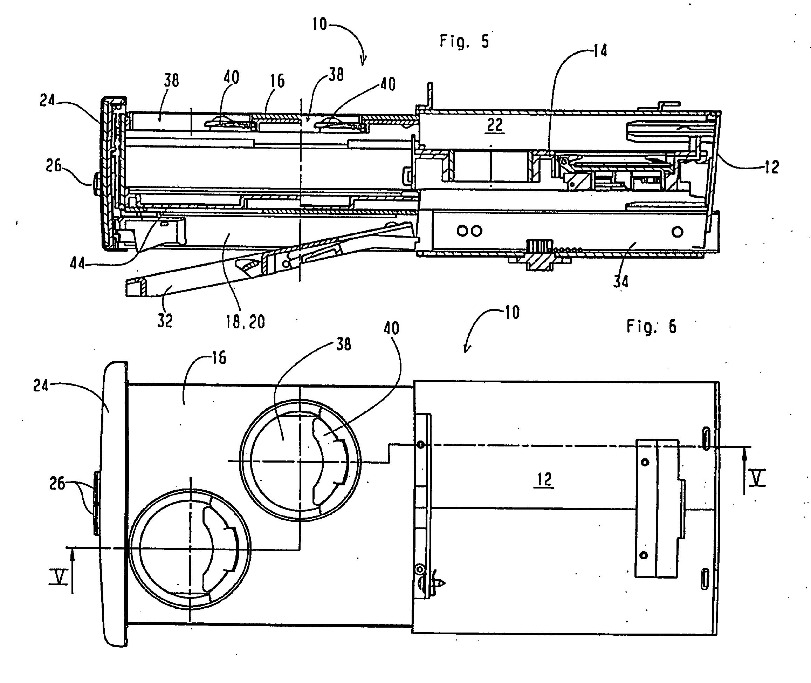

Der in der Zeichnung dargestellte, erfindungsgemäße Halter 10 ist zum Einbau in einen Kraftwagen oder ein sonstiges Fortbewegungsmittel vorgesehen. Der Halter 10 weist ein kastenförmiges, an seiner Vorderseite offenes Gehäuse 12 auf. In einem oberen Bereich des Gehäuses 12 sind zwei wahlweise nutzbare, plattenförmige Auszüge 14, 16 übereinander angeordnet. Die Auszüge 14, 16 befinden sich auf bzw. an einer Oberseite eines Schiebers 18, der nach Art einer Schublade, jedoch ohne Boden ausgebildet ist. Der Schieber 18 weist Längsseitenwände 20 auf, die schubladenartig verschiebbar an Innenseiten von Seitenwänden 22 des Gehäuses 12 geführt sind. An einer Vorderseite sind die Längsseitenwände 20 durch eine Blende 24 miteinander verbunden. Gemeinsam mit dem Gehäuse 12 bildet der Schieber 18 eine Schiebeführung für die beiden Auszüge 14, 16. Es lässt sich wahlweise jeweils einer der beiden Auszüge 14, 16 zusammen mit dem Schieber 18 in eine aus der offenen Vorderseite des Gehäuses 12 vorstehende Gebrauchstellung verschieben. Die Gebrauchsstellung des einen Auszugs 14 ist in Figuren 1-3, die Gebrauchsstellung des anderen Auszugs 16 in Figuren 4-6 dargestellt. Bei Nichtgebrauch lässt sich der Schieber 18 und mit ihm die beiden Auszüge 14, 16 in eine im Gehäuse 12 eingeschobene Grundstellung verschieben, in der die Blende 24 die offene Vorderseite des Gehäuses 12 verschließt.

Der Schieber 18 ist in seiner in das Gehäuse 12 eingeschobenen Grundstellung im Gehäuse 12 verriegelt, er wird durch Druck wahlweise auf eine von zwei Tasten 26 in der Blende 24 entriegelt und fährt federbetätigt in die Gebrauchsstellung aus. In Abhängigkeit von der gewählten Taste 26 wird einer der beiden Auszüge 14, 16 ausgewählt und fährt mit dem Schieber 18 in die Gebrauchsstellung aus, wogegen der nicht ausgewählte Auszug 14, 16 in seiner Grundstellung im Gehäuse 12 verbleibt. In der Grundstellung des Schiebers 18 sind beide Auszüge 14, 16 am Schieber 18 verriegelt, wobei die Verriegelung durch Drücken der dem jeweiligen Auszug 14, 16 zugeordneten Taste 26 gelöst wird, so dass jeweils einer der beiden Auszüge 14, 16 mit dem Schieber 18 ausfährt. Geeignete Verriegelungseinrichtungen sind dem Fachmann an sich bekannt und sollen hier, da sie nicht den eigentlichen Gegenstand der Erfindung bilden, nicht näher erläutert werden.

Der in Figuren 1-3 in der Gebrauchstellung dargestellte Auszug 14 weist zwei Sektglashalter 28 sowie eine kreisrunde Einstellöffnung 30 für eine Sektflasche auf. An einer Unterseite des Schiebers 18 ist eine Stütze 32 angeordnet, die um eine horizontale Achse schwenkbar ist. Die Stütze 32 schwenkt beim Ausfahren des Schiebers 18 schräg nach unten, eine in die Einstellöffnung 30 eingestellte Sektflasche steht auf der Stütze 32 auf. Beim Einschieben des Schiebers 18 in das Gehäuse 12 gleitet die Stütze 32 über einen Boden 34 des Gehäuses 12 und wird dadurch nach oben in eine horizontale Stellung in den Schieber 18 gedrückt.

Die beiden Sektglashalter 28 weisen jeweils ein vertikal im Auszug 14 bewegliches Stellelement 34 auf, das die Form einer Kreisscheibe aufweist. Ein nicht dargestelltes Sektglas ist mit seinem üblicherweise kreisscheibenförmigen Fuß auf das Stellelement 34 stellbar und das Stellelement 34 ist mit dem Sektglas nach unten in eine abgesenkte Stellung drückbar. Beim nach unten Bewegen schwenkt das Stellelement 34 drei in Umfangsrichtung voneinander beabstandete, am Umfang des Sektglashalters 28 angeordnete Niederhalter 36 aus einer in Figuren 1-3 dargestellten, schräg nach oben stehenden Freigabestellung in eine horizontal nach innen stehende Haltestellung (nicht dargestellt) nach unten. In der Haltestellung übergreifen die Niederhalter 36 den Fuß des auf dem Stellelement 34 stehenden Sektglases und halten dieses kippsicher. Durch Anheben des Sektglases schwenkt dessen Fuß die Niederhalter 36 nach oben in die Freigabestellung und kann entnommen werden. Mit den Niederhalten 36 bewegt sich das Stellelement 34 nach oben in seine ursprüngliche Ausgangsstellung. Das Stellelement 34 wird von einem in der Zeichnung nicht sichtbaren, an sich bekannten Schnappfederelement sowohl in seiner oberen als auch in seiner unteren Stellung gehalten. Nach Überwinden einer Zwischenstellung (Totpunkt) schnappt das Schnappfederelement das Stellelement 34 in die jeweilige Endstellung nach oben oder unten. Das Schnappfederelement läuft näherungsweise in Durchmesserrichtung unter dem Stellelement 34 hindurch.

Der in Figuren 4-6 in der Gebrauchstellung dargestellte Auszug 16 weist zwei kreisrunde Einstellöffnungen 38 zum Einstellen von Getränkebehältern wie bspw. Dosen, Bechern oder Tassen auf. Diese Einstellöffnungen 38 weisen einen kleineren Durchmesser als die Einstellöffnung 30 für die Sektflasche auf. Alle drei Einstellöffnungen 30, 38 weisen jeweils eine Durchmesserausgleichsklappe 40, 42 auf, die federbetätigt um eine horizontale Achse in die Einstellöffnung 30, 38 hineinschwenkt. Derartige Durchmesserausgleichsklappen 40, 42 sind an sich bekannt.

Mit dem die beiden Einstellöffnungen 38 für Getränkebehälter aufweisenden Auszug 16 fährt ein im unteren Bereich des Schiebers 18 angeordneter Boden 44 aus, auf dem in die Einstellöffnungen 38, eingestellte Getränkebehälter stehen.

## Patentansprüche

1. Halter mit einem eine Einstellöffnung (38) für einen Getränkebehälter aufweisenden Auszug (16), der in einer Führung zwischen einer eingeschobenen Grundstellung und einer ausgefahrenen Gebrauchsstellung hin- und herbewegbar ist, und mit einem weiteren Auszug (14), der wahlweise anstatt des einen Auszugs (16) in eine Gebrauchsstellung ausfahrbar ist, **dadurch gekennzeichnet, dass** der Halter (10) einen Schieber (18) aufweist, mit dem zusammen sich jeweils einer der beiden Auszüge (14, 16) in die Gebrauchsstellung verschieben lässt.

2. Halter nach Anspruch 1, **dadurch gekennzeichnet, dass** der Halter (10) Schiebeführungen aufweist, mit der die Auszüge (14, 16) schubladenartig zwischen der Grundstellung und der Gebrauchsstellung hin- und herverschiebbar geführt sind.

3. Halter nach Anspruch 1, **dadurch gekennzeichnet, dass** der weitere Auszug (14) einen Sektglashalter (28) aufweist.

4. Halter nach Anspruch 3, **dadurch gekennzeichnet, dass** der Sektglashalter (28) ein vertikal bewegliches Stellelement (34) aufweist, auf dass das Sektglas stellbar ist, dass der Sektglashalter (28) mindestens einen Niederhalter (36) aufweist, der aus einer Freigabestellung in eine Haltestellung und umgekehrt bewegbar geführt ist, und dass das Stellelement (34) eine Wirkverbindung mit dem Niederhalter (36) aufweist, über die das Stellelement (34) bei einem nach unten Bewegen des Stellelements (34) den Niederhalter (36) in die Haltestellung bewegt, in der der Niederhalter (36) einen auf dem Stellelement (34) stehenden Fuß des Sektglases übergreift.

5. Halter nach Anspruch 3, **dadurch gekennzeichnet, dass** der weitere Auszug (14) eine Einstellöffnung (30) für eine Sektflasche und eine Stütze (32) für die Sektflasche aufweist, die beim Ausfahren des Auszugs (14) in die Gebrauchsstellung nach unten schwenkt.

## Claims

1. Holder having a pull-out portion (16) comprising an insertion opening (38) for a drinks container, which pull-out portion is arranged to be moved back and forth in a guide between an inserted basic position and an extended in-use position, and having a further pull-out portion (14) which is extendable to an in-use position, as an alternative instead of the pull-out portion (16), **characterized in that** the holder (10) comprises a slide member (18), by means of and together with which one or other of the two pull-out portions (14, 16) can be moved to the in-use position.

2. Holder according to claim 1, **characterized in that** the holder (10) comprises slide guides, by means of which the pull-out portions (14, 16) are guided displaceably back and forth in the manner of a drawer between the basic position and the in-use position.

3. Holder according to claim 1, **characterized in that** the further pull-out portion (14) comprises a champagne glass holder (28).

4. Holder according to claim 3, **characterized in that** the champagne glass holder (28) comprises a vertically movable stand element (34), on which the champagne glass can be positioned, the champagne glass holder (28) comprises at least one holding-down device (36) which is guided movably from a release position to a holding position and *vice versa,* and the stand element (34) has an operative connection with the holding-down device (36), by means of which the stand element (34), as it moves downwards, moves the holding-down device (36) to the holding position, in which the holding-down device (36) engages over the base of the champagne glass standing on the stand element (34).

5. Holder according to claim 3, **characterized in that** the pull-out portion (14) comprises an insertion opening (30) for a champagne bottle and a support (32) for the champagne bottle, which support pivots downwards upon extension of the pull-out portion (14) to the in-use position.

## Revendications

1. Support, avec une rallonge (16) qui présente une ouverture de placement (38) pour un récipient à boissons et qui peut être déplacée en va-et-vient dans un guide entre une position de base rentrée et une position d'utilisation déployée, et avec une rallonge supplémentaire (14) qui peut être sélectivement déployée dans une position d'utilisation au lieu de la première rallonge (16), **caractérisé en ce que** le support (10) présente un coulisseau (18) conjointement avec lequel une des deux rallonges (14, 16) peut être respectivement coulissée dans la position d'utilisation

2. Support selon la revendication 1, **caractérisé en ce que** le support (10) présente des coulisses par lesquelles les rallonges (14, 16) sont guidées en va-et-vient entre la position de base et la position d'utilisation à la manière de tiroirs.

3. Support selon la revendication 1, **caractérisé en ce que** la rallonge supplémentaire (14) présente un support (28) de verre à champagne.

4. Support selon la revendication 3, **caractérisé en ce que** le support (28) de verre à champagne présente un élément de positionnement (34) verticalement mobile sur lequel le verre à champagne peut être positionné, **en ce que** le support (28) de verre à champagne présente au moins un serre-flan (36) qui est guidé à déplacement d'une position de libération dans une position de maintien et vice-versa, et **en ce que** l'élément de positionnement (34) présente une liaison fonctionnelle avec le serre-flan (36) au moyen de laquelle l'élément de positionnement (34), lorsqu'il est déplacé vers le bas, déplace le serre-flan (36) dans la position de maintien, dans laquelle le serre-flan (36) engage en recouvrement le pied, placé sur l'élément de positionnement (34), du verre à champagne.

5. Support selon la revendication 3, **caractérisé en ce que** la rallonge supplémentaire (14) présente une ouverture de placement (30) pour un verre à champagne et un soutien (32) pour le verre à champagne, qui pivote vers le bas lors du déploiement de la rallonge (14) dans la position d'utilisation.
